# EUROPÄISCHE PATENTSCHRIFT

(11) **EP 2 347 844 B1**
(45) Veröffentlichungstag und Bekanntmachung des Hinweises auf die Patenterteilung: **08.03.2017**
(21) Anmeldenummer: 10151623.5
(22) Anmeldetag: 26.01.2010
(51) Int. Cl.: B23B 49/04, B23C 3/04, B24B 5/14, B24B 5/24, B24D 7/18, B24B 1/00

(54) **Verfahren zum Nachbearbeiten einer Zentrierbohrung**
Method for rectifying a centre hole
Procédé de rectification d'un logement de centrage

(43) Veröffentlichungstag der Anmeldung: 27.07.2011
(73) Patentinhaber: Liechti Engineering AG, 3550 Langnau im Emmental (CH)
(72) Erfinder: Eder, Elmar, CH-3400, Burgdorf (CH)
(74) Vertreter: De Colle, Piergiacomo

(56) Entgegenhaltungen:
- EP-A1- 1 440 753
- FR-A- 1 436 769
- GB-A- 931 373
- US-A- 3 187 470
- US-A1- 2006 029 474

## Beschreibung

Die Erfindung betrifft ein Verfahren zum Nachbearbeiten einer einen konischen Bohrungsteil aufweisenden Zentrierbohrung in einem Werkstück mit einem spanabhebenden Werkzeug.

Bei der Zerspanung von länglichen Werkstücken wird oft zwischen Spitzen gearbeitet. Dabei wird das Werkstück auf der einen Seite fest eingespannt und auf der anderen Seite mit Hilfe einer Zentrierspitze fixiert, welche in eine Zentrierbohrung im Werkstück eingreift.

Die Rohlinge weisen häufig Eigenspannungen auf, welche dazu führen, dass sich das Material durch die Bearbeitung bleibend verformt. Diese Verformung kann bis zu einigen Zehntelmillimetern betragen, was meistens weit ausserhalb der vorgegebenen Toleranzen liegt.

Der Bearbeitungsprozess besteht im Normalfall aus einem Schrupp-Prozess, bei dem versucht wird möglichst viel Material in kurzer Zeit abzutragen und einem SchlichtProzess, bei dem das Werkstück auf die geforderte Genauigkeit und Oberflächengüte bearbeitet wird.

Wenn die Zentrierspitze nach dem Schruppen entfernt wird, verformt sich das Werkstück in eine spannungsfreie Position. Das Aufmass nach dem Schruppen wird so gewählt, dass die Geometrie des fertigen Werkstücks innerhalb des verformten geschruppten Werkstücks liegt. Wird der Schlichtprozess nun auf das entspannte Werkstück angewendet, können die Abweichungen durch Eigenspannungen fast vollständig eliminiert werden. Um den Schlichtprozess auf das entspannte Werkzeug anwenden zu können, muss die Zentrierbohrung an die richtige Stelle im verformten Werkstück verschoben werden.

Es ist bekannt, die bestehende Zentrierbohrung zu entfernen, indem das umgebende Material vollständig entfernt wird, um anschliessend eine neue Zentrierbohrung anzubringen. Dieser Prozess ist sehr aufwändig, denn es muss relativ viel Material entfernt werden, was die Kosten für Rohmaterial, Bearbeitungszeit, Energie und Werkzeugverschleiss erhöht. Ausserdem kann das Werkstück während des Entfernens der alten Zentrierbohrung und des Anbringens der neuen Zentrierbohrung nur einseitig gespannt werden oder muss zusätzlich abgestützt werden. Letzteres ist bei nicht zylindrischen Werkstücken besonders schwierig. Schliesslich muss zum Anbringen der neuen Zentrierbohrung entweder der die Zentrierspitze tragende Reitstock aus dem Prozessbereich entfernt werden, um einem entsprechenden Werkzeug Platz zu machen, oder die am Reitstock befestigte Zentrierspitze muss durch ein Werkzeug zur Nachbearbeitung der Zentrierbohrung ersetzt werden.

Nach der Patentanmeldung EP 1 440 753 A1 ist es bekannt, ein Werkstück rotierend anzutreiben und einen nicht rotierenden Zentrierbohrer in einen Schaft einzuspannen, der in einer Werkzeug-Spannvorrichtung einer Werkzeugspindel gehalten ist. Dadurch ist es möglich, den Zentrierbohrer in den Raum zwischen Werkstück zu führen, ohne dass dabei der Reitstock aus dem Prozessbereich entfernt werden muss. Dieses Verfahren löst aber nicht das Problem, dass eine gegebenenfalls vorhandene Zentrierbohrung vorgängig vollständig entfernt werden muss.

Es ist auch bekannt, Zentrierbohrungen nachzubearbeiten, beispielsweise durch Schleifen. Die verwendeten Werkzeuge sind in der Regel kegelig und es muss auch bei dieser Methode der Reitstock aus dem Prozessbereich entfernt werden, um genügend Platz für das Werkzeug und die das Werkzeug tragende Spindel zu schaffen.

Aus dem Dokument FR 1 436 769 A ist ein Verfahren zum Nachbearbeiten einer einen konischen Bohrungsteil aufweisenden Zentrierbohrung in einem Werkstück mit einem Schleifwerkzeug bekannt, welches rotiert während es über den konischen Bohrungsteil geführt wird und mit seinem freien Ende über den konischen Bohrungsteil geführt wird, während das Werkstück um eine Rotationsachse rotiert und wobei die Längsachse des Werkzeugs in einem spitzen Winkel zur Rotationsachse geführt wird.

Ausgehend von diesem bekannten Stand der Technik liegt der Erfindung die Aufgabe zu Grunde, ein Verfahren zum Nachbearbeiten einer Zentrierbohrung vorzuschlagen, bei dem die Zentrierspitze mit dem sie tragenden Reitstock nicht vollständig aus dem Prozessbereich entfernt werden muss.

Diese Aufgabe wird erfindungsgemäss durch die Merkmale des Anspruchs 1 gelöst, und insbesondere durch die Merkmale, dass das Werkzeug ein Fräswerkzeug ist, welches an seinem freien Ende mindestens eine konvex geformte Schneide aufweist und mit der Schneide über den konischen Bohrungsteil geführt wird.

Diese Lösung hat den besonderen Vorteil, dass das Werkzeug in einem Winkel am Reitstock mit der Zentrierspitze vorbei in die Zentrierbohrung geführt werden kann. Die konvex geformte Schneide erlaubt es, den konischen Teil der Zentrierbohrung entlang einer Mantellinie zu bearbeiten und durch die Drehung des Werkstücks entsteht eine korrigierte Ein Ausführungsbeispiel der Erfindung wird nachstehend unter Bezugnahme auf die angefügten Zeichnungen beschrieben. Es zeigt:
- Figur 1: einen Längsschnitt durch ein Beispiel einer genormten Zentrierbohrung,
- Figur 2: eine perspektivische Darstellung einer beispielsweisen Anordnung eines Werkzeugs in Bezug auf die Zentrierbohrung und
- Figur 3: eine Darstellung ähnlich Figur 2 mit einer anderen Position des Werkzeugs.

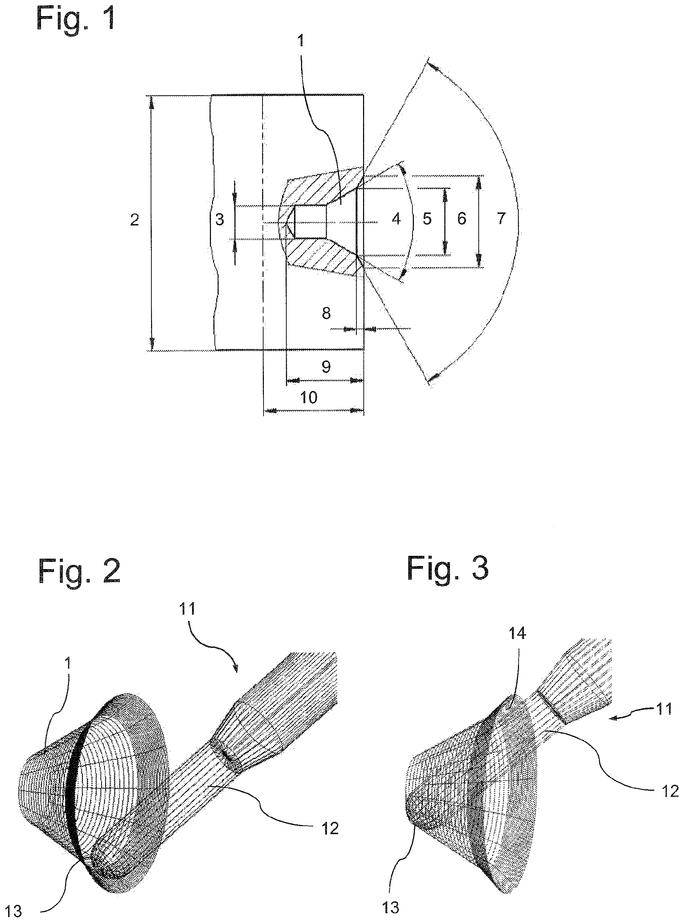

Zentrierbohrungen weisen allgemein einen konischen Bohrungsteil auf, der dazu bestimmt ist, eine konische Zentrierspitze aufzunehmen. Im Zentrum des konischen Bohrungsteils ist ein zylindrischer Bohrungsteil angeordnet, der gewährleistet, dass die Zentrierspitze satt und spielfrei im konischen Bohrungsteil anliegen kann. Figur 1 zeigt als Beispiel einen Längsschnitt einer Zentrierbohrung gemäss der Norm SN ISO 6411 in der Form B mit Schutzsenkung. Die Erfindung ist aber nicht auf solche Zentrierbohrungen beschränkt. Die Zentrierbohrung ist in der Figur 1 mit 1 bezeichnet. 2 ist der Durchmesser des Werkstücks, in dem sich die Zentrierbohrung 1 befindet. Der erwähnte zylindrische Bohrungsteil hat einen Durchmesser 3 und eine gesamte Tiefe 9. Das Mass des Durchmessers 3 variiert abhängig vom Werkstückdurchmesser 2 zwischen 1 und 10 Millimeter. Die Tiefe 9 beträgt gemäss der genannten Norm zwischen 2,2 und 20,4 Millimeter. Der Winkel 4 des konischen Bohrungsteils beträgt in der Regel 60 Grad und dessen grösster Durchmesser 5 zwischen 2,12 und 21,2 Millimeter. Mit 6 ist der grösste Durchmesser der Schutzsenkung bezeichnet, mit 7 dessen Winkel, der in der Regel 120 Grad beträgt und mit 8 die Tiefe. Die Bezugszahl 10 bezeichnet das so genannte Abstechmass, das ist die empfohlene Länge, die vom Werkstück abzutragen ist, um die Zentrierbohrung restlos zu entfernen.
Das Abstechmass beträgt je nach Werkstückdurchmesser zwischen 3,5 und 31 Millimeter.

Die Figuren 2 und 3 zeigen in einer schematischen, perspektivischen Ansicht einen Bereich einer Zentrierbohrung 1 und eines kleinen Fräsers 11. Letzerer hat einen Schaft 12 und dessen freiem Ende eine 13 Kugelkalotte, die im dargestellten Beispiel die Form einer Halbkugel hat. Es können auch Fräswerkzeuge verwendet werden, bei denen die Kugelkalotte einen grösseren Radius hat als der Schaft. Im dargestellten Beispiel wird der Fräser 11 in einem Winkel von etwa 45 Grad zur Achse der Zentrierbohrung geneigt und es wird aus den Figuren deutlich, dass dabei der gesamte Bereich des konischen Bohrungsteils bearbeitet werden kann. Dadurch, dass ein sehr kleiner Kugelfräser verwendet wird, entstehen nur sehr kleine Prozesskräfte, so dass das Werkstück in der Maschine eingespannt bleiben kann und nicht zusätzlich abgestützt werden muss. Durch die genannte Neigung kann die Zentrierspitze in der Nähe des Werkstücks bleiben und muss nicht vollständig aus dem Prozessbereich entfernt werden. Es versteht sich, dass die Neigung des Fräsers 11 in Bezug auf die Rotationsachse maximal so gross sein darf, dass zwischen dem Schaft 12 des Fräsers 11 und der Zentrierbohrung 1 noch ein kleiner Abstand 14 (Figur 3) bleibt, wenn der Arbeitspunkt des Fräsers 11 den kleinsten Durchmesser des konischen Teils der Zentrierbohrung erreicht hat.

Auf einer mehrachsigen Werkzeugmaschine kann das erfindungsgemässe Verfahren durchgeführt werden, indem das Werkzeug mit einer der vorhandenen Werkzeugspindeln betrieben wird.

### Bezugszeichenliste

1 Zentrierbohrung
2 Werkstückdurchmesser
3 Durchmesser des zylindrischen Bohrungsteils
4 Winkel des konischen Bohrungsteils
5 grösster Durchmesser des konischen Bohrungsteils
6 grösster Durchmesser der Schutzsenkung
7 Winkel der Schutzsenkung
8 Tiefe der Schutzsenkung
9 Tiefe der Spitze des zylindrischen Bohrungsteils
10 Abstechmass
11 Fräser
12 Schaft
13 Kugelkalotte
14 Abstand
15
16
17
18
19
20

## Patentansprüche

1. Verfahren zum Nachbearbeiten einer einen konischen Bohrungsteil aufweisenden Zentrierbohrung (1) in einem Werkstück mit einem spanabhebenden Werkzeug (11), wobei das Werkzeug ein Fräswerkzeug (11) ist, welches rotiert während es über den konischen Bohrungsteil (4) geführt wird und an seinem freien Ende mindestens eine konvex geformte Schneide (13) aufweist und mit der Schneide (13) über den konischen Bohrungsteil (4) geführt wird, während das Werkstück um eine Rotationsachse rotiert und wobei die Längsachse des Werkzeugs in einem spitzen Winkel zur Rotationsachse geführt wird.

2. Verfahren nach Anspruch 1, **dadurch gekennzeichnet, dass** das Werkzeug an seinem freien Ende die Form einer Kugelkalotte (13) hat.

3. Verfahren nach Anspruch 2, **dadurch gekennzeichnet, dass** Kalottenradius höchstens 15 Prozent grösser ist als der kleinste Radius des konischen Bohrungsteils.

4. Verfahren nach einem der vorangehenden Ansprüche, **dadurch gekennzeichnet, dass** der Winkel zwischen 30 und 60 Grad beträgt.

5. Verfahren nach einem der vorangehenden Ansprüche, **dadurch gekennzeichnet, dass** es mit einer mehrachsigen Werkzeugmaschine ausgeführt wird.

## Claims

1. Method for rectifying a centre hole (1) exhibiting a conical hole section in a workpiece with a cutting tool (11), wherein the tool is a milling tool (11), which rotates while it is guided over the conical hole section (4) and exhibits at its free end at least one convex-shaped cutting edge (13) and is guided with the cutting edge (13) over the conical hole section (4), while the workpiece rotates about an axis of rotation, and whereby the longitudinal axis of the tool is guided at an acute angle to the axis of rotation.

2. Method according to claim 1, **characterized in that** the tool at is free end has the form of a spherical cap (13).

3. Method according to claim 2, **characterized in that** the radius of the cap is at most 15 percent greater than the smallest radius of the conical hole section.

4. Method according to one of the preceding claims, **characterized in that** the angle is between 30 and 60 degrees.

5. Method according to one of the preceding claims, **characterized in that** it is produced with a multi-axial machine tool.

## Revendications

1. Procédé de rectification d'un alésage de centrage (1) présentant une partie d'alésage conique dans une pièce, comprenant un outil d'enlèvement de copeaux (11), l'outil étant un outil de fraisage (11) qui est entraîné en rotation pendant qu'il est guidé sur la partie d'alésage conique (4) et qui présente à son extrémité libre au moins une arête de coupe de forme convexe (13) et qui est guidé avec l'arête de coupe (13) sur la partie d'alésage conique (4), pendant que la pièce tourne autour d'un axe de rotation et l'axe longitudinal de l'outil étant guidé suivant un angle aigu par rapport à l'axe de rotation.

2. Procédé selon la revendication 1, **caractérisé en ce que** l'outil présente au niveau de son extrémité libre la forme d'une calotte sphérique (13).

3. Procédé selon la revendication 2, **caractérisé en ce que** le rayon de calotte est supérieur d'au plus de 15 % au plus petit rayon de la partie d'alésage conique.

4. Procédé selon l'une quelconque des revendications précédentes, **caractérisé en ce que** l'angle est compris entre 30 et 60 degrés.

5. Procédé selon l'une quelconque des revendications précédentes, **caractérisé en ce qu'**il est mis en oeuvre avec une machine-outil à plusieurs axes.
